# EUROPÄISCHE PATENTANMELDUNG

(11) **EP 3 587 355 A1**
(43) Veröffentlichungstag der Anmeldung: **01.01.2020**
(21) Anmeldenummer: 19181996.0
(22) Anmeldetag: 24.06.2019
(51) Int. Cl.: C02F 1/00, C02F 5/00, C02F 1/48, C02F 1/74

(54) **WASSERAKTIVATOR**

(30) Priorität: 27.06.2018 DE 202018103659 U
(71) Anmelder: Weber, Eckhard, 34289 Zierenberg (DE)
(72) Erfinder: Weber, Eckhard, 34289 Zierenberg (DE)
(74) Vertreter: Patentanwälte Walther Hinz Bayer PartGmbB

(57) **Zusammenfassung**

Gegenstand der Erfindung ist ein Wasseraktivator (1) umfassend ein Gehäuse (3), wobei in dem Gehäuse (3) eine wasserdurchströmte Verwirbelungseinrichtung (10) mit einer zylindrischen Hülse (12) angeordnet ist, wobei zentrisch in der Verwirbelungseinrichtung ein Orgonstrahler (50) angeordnet ist, wobei die Hülse (12) mehrere sich parallel zur Längsachse des Gehäuses (3) erstreckende mäanderartig verlaufende Kanäle (16) aufweist, wobei die mäanderartig verlaufende Kanäle(16) mehrere hintereinander angeordnete Umlenkungen (20) besitzen, wobei eine Umlenkung (20) zwei Flanken (25) und einen die Flanken (25) verbindenden Steg (8) umfasst, wobei die Flanken (25) in einem Winkel α zwischen 20° und 30°, insbesondere in einem Winkel von 25° zur Querachse (27) des Gehäuses (3) verlaufen.

## Beschreibung

Die vorliegende Erfindung betrifft einen Wasseraktivator umfassend ein Gehäuse, wobei in dem Gehäuse eine wasserdurchströmte Verwirbelungseinrichtung mit einer zylindrischen Hülse angeordnet ist, wobei zentrisch in der Verwirbelungseinrichtung ein erster Orgonstrahler angeordnet ist, wobei die Hülse mehrere sich parallel zur Längsachse des Gehäuses erstreckende mäanderartig verlaufende Kanäle aufweist, wobei die mäanderartig verlaufenden Kanäle mehrere hintereinander angeordnete Umlenkungen aufweisen, wobei eine Umlenkung zwei Flanken und einen die Flanken verbindenden Steg umfasst.

Wasseraktivatoren der eingangs genannten Art sind aus dem Stand der Technik bereits bekannt. Derartige Wasseraktivatoren steigern den Sauerstoffgehalt des Wassers und sie unterstützen alle natürlichen Regenerierungsprozesse und strukturieren im Wasser vorhandene Mikro-Cluster. Das Wasser wird darüber hinaus weicher, was sich positiv auf den Geschmack des Wassers auswirkt. Auch hat sich herausgestellt, dass Rohrleitungen und Heizstäbe von Ablagerungen, insbesondere Kalkablagerungen verschont bleiben, was zu Energieeinsparungen führen kann. Vielfach lösen sich sogar bereits vorhandene Kalkablagerungen im Wasserleitungsnetz eines Gebäudes, in das ein solcher Wasseraktivator eingebaut ist.

Ein solcher Wasseraktivator weist eine Verwirbelungseinrichtung auf. Die Verwirbelung des Wassers durch den Wasseraktivator ist wesentlicher Grund für die zuvor erwähnte Verbesserung des durch den Wasseraktivator behandelten Wassers in Hinblick auf die Anreicherung mit Sauerstoff und beispielsweise auch in Hinblick auf eine Geschmacksverbesserung des Wassers. Der Verwirbelung dienen die mäanderartig verlaufenden Kanäle in der Hülse der Verwirbelungseinrichtung. Beim Stand der Technik ist es nun so, dass die mäanderartigen Umlenkungen einen verhältnismäßig hohen Strömungswiderstand bieten. Dies ist darin begründet, dass die Flanken der mäanderartig ausgebildeten Umlenkungen im Wesentlichen senkrecht zur Mittellängsachse des Gehäuses bzw. der Hülse der Verwirbelungseinrichtung verlaufen. Die Folge hiervon ist, dass das Wasser erheblich an Strömungsgeschwindigkeit verliert, was die Verwirbelung vermindert, was wiederum schlechtere Ergebnisse, beispielsweise in Hinblick auf die Anreicherung des Wassers mit Sauerstoff zur Folge hat.

Die der Erfindung zugrunde liegende Aufgabe besteht nunmehr darin, hier Abhilfe zu schaffen.

Zur Lösung der Aufgabe wird erfindungsgemäß vorgeschlagen, dass die Flanken in einem Winkel zwischen 20° und 30°, insbesondere in einem Winkel von 25° zur Querachse des Gehäuses verlaufen. Die Querachse steht hierbei senkrecht zur Mittellängsachse des Gehäuses. Das heißt, dass durch eine Abflachung der mäanderartigen Umlenkungen schlussendlich eine Erhöhung der Strömungsgeschwindigkeit erreicht wird, mit der Folge, dass sich in den Kanälen mehr Wirbel bilden, und insofern dafür gesorgt ist, dass die Sauerstoffaufnahme des Wassers begünstigt wird.

Vorteilhafte Merkmale und Ausgestaltungen der Erfindung ergeben sich aus den Unteransprüchen.

So ist nach einem besonderen Merkmal der Erfindung vorgesehen, dass der mäanderartige Kanal bei einer Umlenkung im Bereich des äußeren Scheitels einen Radius zwischen 25 mm und 40 mm, vorzugsweise 33 mm aufweist. Weiterhin weist vorteilhaft der mäanderartige Kanal bei einer Umlenkung im Bereich des inneren Scheitels ein Radius zwischen 3 mm und 8 mm, vorzugsweise allerdings von 6 mm auf. In Verbindung mit dem Flankenwinkel von vorzugsweise 25°, wie zuvor bereits beschrieben, ergeben sich somit etwas langgezogene Umlenkungen in dem mäanderartigen Kanal.

Als besonders vorteilhaft hat sich herausgestellt, wenn der mäanderartige Kanal an der Auslaufseite in einem Winkel zwischen 40° und 50°, vorzugsweise von 45° zur Mittellängsachse verläuft. Insbesondere bei der Anordnung von drei mäanderartigen Kanälen umfangsverteilt auf der Hülsenwandung der zylindrischen Hülse, die alle in gleicher Weise ausgebildet sind, ergibt sich im Auslaufbereich der Kanäle durch den schrägen Einlauf des Wassers eine optimale Verwirbelung des Wassers. Nach einem weiteren Merkmal der Erfindung ist vorgesehen, dass der mäanderförmige Kanal auf der Einlaufseite trichterförmig ausgebildet ist, wobei sich die trichterförmigen Einlässe der insbesondere drei mäanderartigen Kanäle, die umfangsverteilt in der Hülsenwandung der zylindrischen Hülse angeordnet sind, im Wesentlichen unmittelbar zueinander anschließen, um so für die optimale Zuführung des Wassers in die mäanderartigen Kanäle zu sorgen.

Nach einem weiteren Merkmal der Erfindung sind die mäanderartigen Kanäle durch das Gehäuse zur Außenseite hin abgedichtet. Das heißt, dass die Kanäle in der Hülsenwandung nutartig ausgebildet sind, und dass die Abdeckung der Kanäle durch die Wandung des Gehäuses des Wasseraktivators erfolgt.

Weiterhin hat sich als vorteilhaft herausgestellt, wenn das Gehäuse an der Einlaufseite eine Staukammer mit der Verwirbelungseinrichtung bildet. Das heißt, dass vor der Stirnseite der Hülse der Verwirbelungseinrichtung eine Staukammer entsteht. Insbesondere zur Verteilung des Wassers in der Staukammer ist ein teilkugelartiger Prallkörper vorgesehen, der Teil der Verwirbelungseinrichtung ist. Dieser teilkugelartige Prallkörper ist insbesondere Teil der Hülse, die die mäanderartigen Kanäle auf ihrem bzw. im Umfang aufnimmt. Es hat sich weiterhin als vorteilhaft herausgestellt, wenn das Gehäuse auf der Auslauseite eine Verwirbelungskammer mit der Verwirbelungseinrichtung bildet. Die Verwirbelungskammer zeigt ein konisches Auslaufelement, das Teil der Verwirbelungseinrichtung und hier insbesondere Teil der Hülse ist, die die mäanderartigen Kanäle aufweist. Das konische Auslaufelement ist hierbei so ausgerichtet, dass es mit seiner Spitze zur Auslaufseite hinzeigt. Es wurde bereits darauf hingewiesen, dass der mäanderartige Kanal an der Auslaufseite in einem Winkel von vorzugsweise 45° zur Mittelachse verläuft. Dadurch, dass in die Verwirbelungskammer das Wasser von den drei mäanderartigen Kanälen jeweils in diesem Winkel von vorzugsweise 45° einläuft, findet in der Verwirbelungskammer eine Strudelbildung statt, die insofern dort noch zu einer zusätzlichen Sauerstoffanreicherung des Wassers führt.

Nach einem weiteren Merkmal der Erfindung ist vorgesehen, dass ein - und/oder auslaufseitig das Gehäuse mindestens einen Magnet, vorteilhaft vier Magnete, insbesondere einen oder vorteilhaft vier Neodymmagnete aufweist. Die Magnete haben die Aufgabe, den im Wasser gelösten Kalk in seiner Mikrostruktur zu verändern. Dies fördert den Weichwassereffekt. Durch die Magnete verändert sich der Kalk dahingehend, dass er sich nicht mehr, wie zuvor beschrieben, an den Wasserrohren absetzen kann, sondern er vielmehr eine andere Struktur erhält, die dafür sorgt, dass ein Absetzen des Kalkes an der Rohrwandung nicht mehr möglich ist.

Nach einem weiteren vorteilhaften Merkmal der Erfindung weist das Gehäuse im Bereich der Verwirbelungseinrichtung und hier insbesondere im Bereich des ersten Orgonstrahlers eine erste Kupferspirale auf. Kupferspiralen haben die Eigenschaft dem Wasser einen zusätzlichen Impuls zur Energetisierung zu verleihen. Diese erste Kupferspirale ist vorzugsweise linksdrehend ausgebildet und weist dreizehn Windungen auf.

Es wurde bereits darauf hingewiesen, dass in der Verwirbelungseinrichtung ein erster Orgonstrahler angeordnet ist. Ein solcher erster Orgonstrahler der auslaufseitig mehrere, insbesondere neun ringförmige Rippen aufweist, zeigt im Bereich der ringförmigen Rippen eine zweite Kupferspirale, die allerdings rechtsdrehend ausgebildet ist. Die Verwendung sowohl einer linksdrehenden wie auch einer rechtsdrehenden Kupferspirale wirkt sich vorteilhaft auf die Energetisierung des Wassers aus.

Ein besonders vorteilhaftes Merkmal der Erfindung zeichnet sich dadurch aus, dass der erste Orgonstrahler einlaufseitig einen weiteren kleinen, zweiten Orgonstrahler mit vier ringförmigen Rippen aufweist.
- Fig. 1: zeigt den Wasseraktivator mit mehreren Schnittebenen in der Tiefe;
- Fig. 2: zeigt in einer Abwicklung der Hülse der Verwirbelungseinrichtung den Verlauf und die Ausbildung der drei mäanderartigen Kanäle.

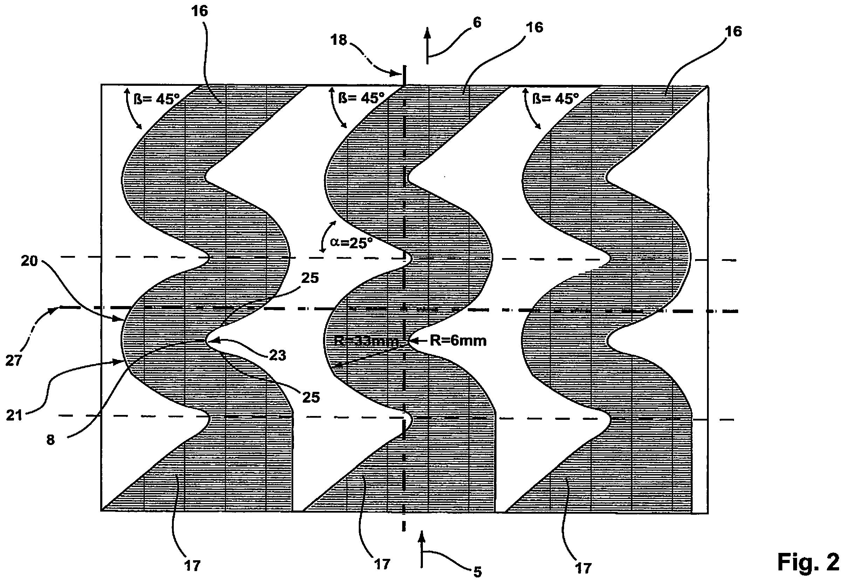

Das Gehäuse des insgesamt mit 1 bezeichneten Wasseraktivators weist das Bezugszeichen 3 auf. Durch das Gehäuse 3 strömt Wasser, das aktiviert wird, wobei die Einlaufseite durch den Pfeil 5 gezeichnet ist, die Auslaufseite durch den Pfeil 6. In dem Gehäuse 3, das aus Kunststoff oder Edelstahl hergestellt sein kann, befindet sich die insgesamt mit 10 bezeichnete Verwirbelungseinrichtung. Die Verwirbelungseinrichtung 10 umfasst eine aus Kunststoff, insbesondere aus POM hergestellte Hülse 12. Auf der Hülse 12 befinden sich umfangsverteilt drei mäanderartig verlaufende Kanäle 16, wobei die Kanäle auf der Außenseite durch das Gehäuse 3 abdichtend abgedeckt sind. Die Ausbildung der mäanderartigen Kanäle 16 ist im Einzelnen in Fig. 2 dargestellt. Fig. 2 zeigt eine Abwicklung der Hülse 12. Einlaufseitig (Pfeil 5) besitzen die mäanderartig ausgebildeten Kanäle eine trichterförmige Ausbildung 17. Auslaufseitig (Pfeil 6) ist die Richtung der mäanderartigen Kanäle 16 derart, dass diese in einem Winkel β von 45° zur Mittellängsachse 18 der Hülse verlaufen.

Ein jeder mäanderartige Kanal 16 weist Umlenkungen 20 auf, wobei der mäanderartige Kanal bei einer Umlenkung 20 im Bereich des äußeren Scheitels 21 ein Radius von R = 33 mm aufweist. Der innere Scheitel 23 besitzt einen Radius von R = 6 mm. Die beiden Flanken 25, die sich an den Steg 8 im Bereich des inneren Scheitels 23 mit dem Radius von R = 6 mm anschließen, stehen in einem Winkel α von 25° zur Querachse 27, die senkrecht auf der Mittellängsachse 18 steht.

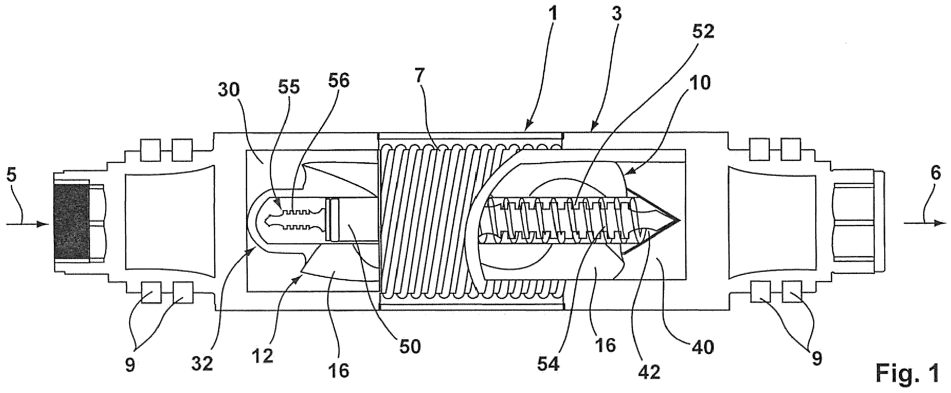

Bei Betrachtung von Fig. 1 ergibt sich des Weiteren, dass das Gehäuse 3 einlaufseitig (Pfeil 5) eine Staukammer 30 aufweist, wobei in der Staukammer 30 ein teilkugelartiger Prallkörper 32 angeordnet ist, der an der Stirnseite der Hülse 12 angeordnet ist. Durch den teilkugelartigen Prallkörper 32 erfolgt eine optimale Verteilung des einströmenden Wassers (Pfeil 5) in die mäanderartigen Kanäle 16. Auslaufseitig (Pfeil 6) ist die Verwirbelungskammer 40 vorgesehen, wobei in diesem Bereich die Hülse 12 ein konisches Auslaufelement 42 zeigt, dessen Spitze in Richtung des Auslaufs (Pfeil 6) zeigt.

Im Inneren der Hülse 12 befindet sich der mit 50 bezeichnete erste Orgonstrahler. Im Bereich des ersten Orgonstrahlers weist das Gehäuse 3 auf der Außenseite eine erste linksdrehende Kupferspirale 7 mit 13 Windungen auf. Der erste Orgonstrahler besitzt neun hintereinander angeordnete Rippen 52, wobei der Orgonstrahler 50 im Bereich der Rippen eine rechtsdrehende zweite Kupferspirale 54 zeigt. Einlaufseitig (Pfeil 5) weist der Orgonstrahler 50 einen zweiten kleineren Orgonstrahler 55 auf, der lediglich vier Rippen 56 aufweist. Der kleinere zweite Orgonstrahler 55 ragt bis in den teilkugelartigen Prallkörper 32 hinein. Einlassseitig (Pfeil 5) und auch auslassseitig (Pfeil 6) sind am Gehäuse umfangsverteilt Neodymmagnete 9 vorgesehen.

### Bezugszeichenliste:

- 1: Wasseraktivator
- 3: Gehäuse
- 5: Pfeil
- 6: Pfeil
- 7: erste Kupferspirale auf dem Gehäuse
- 8: Steg zwischen den Flanken
- 9: Magnete
- 10: Verwirbelungseinrichtung
- 12: zylindrische Hülse
- 16: mäanderartiger Kanal
- 17: trichterförmige Ausbildung des mäanderartigen Kanals
- 18: Mittellängsachse
- 20: Umlenkung in dem mäanderartigen Kanal
- 21: äußerer Scheitel
- 23: innerer Scheitel
- 25: Flanke
- 27: Querachse
- 30: Staukammer
- 32: teilkugelartiger Prallkörper
- 40: Verwirbelungskammer
- 42: konisches Auslaufelement
- 50: erster Orgonstrahler
- 52: Rippe des ersten Orgonstrahlers
- 54: zweite Kupferspirale auf dem ersten Orgonstrahler
- 55: zweiter Orgonstrahler
- 56: Rippe des zweiten Orgonstrahlers

## Patentansprüche

1. Wasseraktivator (1) umfassend ein Gehäuse (3), wobei in dem Gehäuse (3) eine wasserdurchströmte Verwirbelungseinrichtung (10) mit einer zylindrischen Hülse (12) angeordnet ist, wobei zentrisch in der Verwirbelungseinrichtung ein Orgonstrahler (50) angeordnet ist, wobei die Hülse (12) mehrere sich parallel zur Längsachse des Gehäuses (3) erstreckende mäanderartig verlaufende Kanäle (16) aufweist, wobei die mäanderartig verlaufende Kanäle(16) mehrere hintereinander angeordnete Umlenkungen (20) besitzen, wobei eine Umlenkung (20) zwei Flanken (25) und einen die Flanken (25) verbindenden Steg (8) umfasst,
**dadurch gekennzeichnet,**
**dass** die Flanken (25) in einem Winkel α zwischen 20° und 30°, insbesondere in einem Winkel von 25° zur Querachse (27) des Gehäuses (3) verlaufen.

2. Wasseraktivator (1) nach Anspruch 1,
**dadurch gekennzeichnet,**
**dass** der mäanderförmige Kanal (16) bei einer Umlenkung (20) im Bereich des äußeren Scheitels (21) einen Radius zwischen 25 mm und 40 mm, vorzugsweise von 30 mm aufweist.

3. Wasseraktivator (1) nach einem der Ansprüche 1 oder 2,
**dadurch gekennzeichnet,**
**dass** der mäanderförmige Kanal (16) bei einer Umlenkung (20) im Bereich des inneren Scheitels (23) einen Radius zwischen 3 mm und 8 mm, vorzugsweise von 6 mm aufweist.

4. Wasseraktivator (1) nach einem der voranstehenden Ansprüche,
**dadurch gekennzeichnet,**
**dass** der mäanderartige Kanal (16) auf der Auslaufseite (Pfeil 6) in einem Winkel β zur Mittellängsachse verläuft.

5. Wasseraktivator (1) nach Anspruch 4,
**dadurch gekennzeichnet,**
**dass** der Winkel β zwischen 40° und 50°, vorzugsweise 45°, beträgt.

6. Wasseraktivator (1) nach einem der voranstehenden Ansprüche,
**dadurch gekennzeichnet,**
**dass** der mäanderförmige Kanal (16) auf der Einlaufseite (Pfeil 5) trichterförmig ausgebildet ist.

7. Wasseraktivator (1) nach Anspruch 6,
**dadurch gekennzeichnet,**
**dass** auf der Hülse (12) umfangsverteilt drei mäanderartige Kanäle (16) angeordnet sind.

8. Wasseraktivator (1) nach Anspruch 7,
**dadurch gekennzeichnet,**
**dass** die mäanderartigen Kanäle (16) durch das Gehäuse (3) zur Außenseite zu abgedichtet sind.

9. Wasseraktivator (1) nach einem der voranstehenden Ansprüche,
**dadurch gekennzeichnet,**
**dass** das Gehäuse (3) auf der Einlaufseite eine Staukammer (30) mit der Verwirbelungseinrichtung (10) bildet.

10. Wasseraktivator (1) nach einem der voranstehenden Ansprüche,
**dadurch gekennzeichnet,**
**dass** das Gehäuse (3) auf der Auslaufseite (Pfeil 6) eine Verwirbelungskammer (40) mit der Verwirbelungseinrichtung (10) bildet.

11. Wasseraktivator (1) nach einem der voranstehenden Ansprüche,
**dadurch gekennzeichnet,**
**dass** ein- und/oder auslaufseitig das Gehäuse (3) mindestens einen, vorteilhaft vier Magnete (9) aufweist.

12. Wasseraktivator (1) nach Anspruch 11,
**dadurch gekennzeichnet,**
**dass** der mindestens eine Magnet (9) in Strömungsrichtung gesehen vor der Staukammer (30) und/oder hinter der Verwirbelungskammer (40) auf dem Gehäuse (3) angeordnet ist.

13. Wasseraktivator (1) nach einem der voranstehenden Ansprüche,
**dadurch gekennzeichnet,**
**dass** das Gehäuse (3) im Bereich der Verwirbelungseinrichtung (10) eine erste Kupferspirale (7) aufweist.

14. Wasseraktivator (1) nach einem der voranstehenden Ansprüche,
**dadurch gekennzeichnet,**
**dass** der Orgonstrahler (50) auslaufseitig mehrere, insbesondere neun ringförmige Rippen (52) aufweist.

15. Wasseraktivator (1) nach Anspruch 14,
**dadurch gekennzeichnet,**
**dass** der erste Orgonstrahler (50) einlaufseitig einen kleineren, zweiten Orgonstrahler (55) aufweist mit vier ringförmigen Rippen (56).

16. Wasseraktivator (1) nach einem der voranstehenden Ansprüche 14 oder 15,
**dadurch gekennzeichnet,**
**dass** der erste Orgonstrahler (50) im Bereich der ringförmigen Rippen (52) eine zweite Kupferspirale (54) aufweist.

17. Wasseraktivator (1) nach einem der Ansprüche 9 bis 16,
**dadurch gekennzeichnet,**
**dass** zur Verteilung des Wassers in der Staukammer (30) ein teilkugelartiger Prallkörper (32) vorgesehen ist, der Teil der Verwirbelungseinrichtung (10) ist.

18. Wasseraktivator (1) nach einem der Ansprüche 10 bis 17,
**dadurch gekennzeichnet,**
**dass** ein konisches Auslaufelement (42) in die Verwirbelungskammer (40) ragt, das Teil der Verwirbelungseinrichtung (10) ist.
